# EUROPÄISCHE PATENTSCHRIFT

(11) **EP 1 023 368 B1**
(45) Veröffentlichungstag und Bekanntmachung des Hinweises auf die Patenterteilung: **27.06.2001**
(21) Anmeldenummer: 98949996.7
(22) Anmeldetag: 08.09.1998
(51) Int. Cl.: C08J 9/16, C08F 257/02

(54) **VERFAHREN ZUR HERSTELLUNG VON EXPANDIERBAREN STYROLPOLYMERISATEN**
METHOD FOR PRODUCING EXPANDABLE STYRENE POLYMERS
PROCEDE DE PRODUCTION DE STYRENE-POLYMERE EXPANSE

(30) Priorität: 29.09.1997 DE 19742910
(43) Veröffentlichungstag der Anmeldung: 02.08.2000
(73) Patentinhaber: BASF AKTIENGESELLSCHAFT, 67056 Ludwigshafen (DE)
(72) Erfinder: GLÜCK, Guiscard, D-55129 Mainz (DE); HAHN, Klaus, D-67281 Kirchheim (DE)
(86) Internationale Anmeldenummer: EP9805684
(87) Internationale Veröffentlichungsnummer: WO9916817

(56) Entgegenhaltungen:
- US-A- 5 266 602
- PATENT ABSTRACTS OF JAPAN vol. 015, no. 056 (C-0804), 8. Februar 1991 & JP 02 284905 A (MITSUBISHI YUKA BADISCHE CO LTD), 22. November 1990

## Beschreibung

Die Erfindung betrifft ein Verfahren zur Herstellung expandierbarer Styrolpolymerisate (EPS) mit verringerter Wärmeleitfähigkeit.

Polystyrolpartikelschaumstoffe sind seit langer Zeit bekannt und haben sich auf vielen Gebieten bewährt. Die Herstellung derartiger Schaumstoffe erfolgt durch Aufschäumen von mit Treibmitteln imprägnierten Polystyrolpartikeln und nachfolgendes Verschweißen der so hergestellten Schaumpartikel zu Formkörpern. Ein wichtiges Einsatzgebiet ist die Wärmedämmung im Bauwesen.

Die zur Wärmedämmung eingesetzten Schaumstoffplatten aus Polystyrolpartikelschaum haben zumeist Dichten von etwa 30 g/l, da bei diesen Dichten die Wärmeleitfähigkeit des Polystyrolpartikelschaums ein Minimum aufweist. Aus Gründen der Materialeinsparung bzw. Raumeinsparung wäre es wünschenswert, Schaumstoffplatten mit geringeren Dichten, insbesondere ≤ 15 g/l zur Wärmeisolation einzusetzen. Die Herstellung derartiger Schaumstoffe ist technisch kein Problem. Schaumstoffplatten mit so geringer Dichte weisen jedoch eine drastisch verschlechterte Wärmedämmfähigkeit auf, so daß sie die Anforderungen der Wärmeleitklasse 035 (DIN 18 164, Teil 1) nicht erfüllen.

Nun ist es bekannt, die Wärmeleitfähigkeit von Schaumstoffen durch Einbau von athermanen Materialien, wie Ruß, Metalloxiden, Metallpulver oder Farbstoffpigmenten, zu vermindern. In der Patentanmeldung PCT/EP 97/02457 wird vorgeschlagen, Graphit als athermanes Material einzusetzen. In dieser Patentanmeldung ist auch ausführlich ein Verfahren zur Herstellung von Graphitpartikel enthaltendem EPS beschrieben, bei dem Styrol in wäßriger Suspension in Gegenwart der Graphitpartikel polymerisiert wird. Als Polymerisationsinitiatoren wird in den Beispielen eine Kombination von Dicumylperoxid und Dibenzoylperoxid eingesetzt. Bei der Übertragung des Verfahrens in größere Maßstäbe stellt sich jedoch heraus, daß es Probleme mit der Abfuhr der Reaktionswärme gibt, und daß es in manchen Fällen zu Koagulationen kommt.

Der Erfindung lag die Aufgabe zugrunde, ein einfaches und problemlos durchführbares Verfahren zur Herstellung von EPS durch i Suspensionspolymerisation von Styrol in Gegenwart von Graphitpartikeln zu entwickeln.

Gegenstand der Erfindung ist ein Verfahren zur Herstellung von expandierbaren Styrolpolymerisaten, bei dem man Styrol, gegebenenfalls zusammen mit bis zu 20 % seines Gewichts an Comonomeren, in wäßriger Suspension in Gegenwart von 0,1 bis 25 Gew.-% Graphitpartikel und von mindestens zwei, bei verschiedenen Temperaturen zerfallenden organischen Peroxiden A und B polymerisiert, wobei das Peroxid A eine Halbwertszeit von 14 bei 80°C bis 100°C, und das Peroxid B eine Halbwertszeit von 14 bei 110°C bis 140°C aufweist und wobei das bei niedrigerer Temperatur zerfallende Peroxid A beim Zerfall weder Benzoyl- noch Benzylradikale bildet.

In der EP-A 488 040 ist ein Verfahren zur Herstellung von benzolfreiem EPS beschrieben, bei dem Styrol in wäßriger Suspension in Gegenwart von zwei bei verschiedenen Temperaturen zerfallenden organischen Peroxiden polymerisiert wird. Das bei höherer Temperatur zerfallende Peroxid soll benzoylgruppenfrei sein, bevorzugt ist Dicumylperoxid. Das bei niedriger Temperatur zerfallende Peroxid ist vorzugsweise Dibenzoylperoxid, also ein Peroxid, das beim Zerfall Benzoylradikale bildet, und bei dem die oben beschriebenen Probleme auftreten. Daneben ist auch tert.-Butylperoxy-2-ethylhexanoat genannt. An keiner Stelle der Druckschrift ist jedoch der Zusatz von Graphit zur Erniedrigung der Wärmeleitfähigkeit der Schaumstoffe erwähnt, und erst recht nicht sind die Probleme angesprochen, die bei der Polymerisation in Gegenwart von Graphit auftreten.

Unter expandierbaren Styrolpolymerisaten werden Treibmittel enthaltende Styrolpolymerisate verstanden.

Das erfindungsgemäße EPS enthält als Polymermatrix Homopolystyrol oder Styrolcopolymerisate mit bis zu 20 Gew.-%, bezogen auf das Gewicht der Polymeren, an ethylenisch ungesättigten Comonomeren, insbesondere Alkylstyrole, Divinylbenzol, Acrylnitril oder α-Methylstyrol.

Bei der erfindungsgemäßen Suspensionspolymerisation können die üblichen Hilfsmittel, wie z. B. Suspensionsstabilisatoren, Treibmittel, Kettenüberträger, Expandierhilfsmittel, Keimbildner und Weichmacher zugesetzt werden. Besonders bevorzugt ist der Zusatz von Flammschutzmitteln, vorzugsweise in Mengen von 0,6 bis 6 Gew.-% und von Flammschutzsynergisten in Mengen von 0,1 bis 1 Gew.-%, jeweils bezogen auf das resultierende Styrolpolymerisat. Bevorzugte Flammschutzmittel sind aliphatische, cycloaliphatische und aromatische Bromverbindungen, wie Hexabromcyclododecan, Pentabrommonochlorcyclohexan und Pentabromphencylallylether. Geeignete Synergisten sind C-C- oder O-O-labile organische Verbindungen, wie Dicumyl und Dicumylperoxid. Treibmittel werden in Mengen von 3 bis 10 Gew.-%, bezogen auf Styrolpolymerisat zugesetzt. Man kann sie vor, während oder nach der Polymerisation der Suspension zusetzen. Geeignete Treibmittel sind aliphatische Kohlenwasserstoffe mit 4 bis 6 Kohlenstoffatomen. Es ist vorteilhaft, als Suspensionsstabilisatoren anorganische Pickering-Dispergatoren, z.B. Magnesiumpyrophosphat oder Calciumphosphat einzusetzen.

Der eingesetzte Graphit hat vorzugsweise eine mittlere Partikelgröße von 1-50 µm, insbesondere von 2,5-12 µm, ein Schüttgewicht von 100-500 g/l und eine spezifische Oberfläche von 5 - 20 m²/g. Es kann Naturgraphit oder synthetischer Graphit eingesetzt werden.

Die Graphitpartikel werden bei der erfindungsgemäßen Suspensionspolymerisation in Mengen von 0,1 bis 25, insbesondere von 2 bis 8 Gew.-%, bezogen auf das resultierende Styrolpolymerisat, zugegeben. Sie werden entweder pulverförmig oder als granulatförmiges Konzentrat in Polystyrol eingesetzt. Es ist grundsätzlich auch möglich, die Graphitpartikel erst im Verlauf der Suspensionspolymerisation zuzusetzen, bevorzugt während der ersten Hälfte des Polymerisationszyklus.

Erfindungsgemäß wird die Suspensionspolymerisation in Gegenwart von mindestens zwei bei verschiedenen Temperaturen zerfallenden Peroxiden durchgeführt. Das bei der niedrigeren Temperatur zerfallende Peroxid A sollte eine Halbwertszeit von 1 Stunde bei 80°C bis 100°C, vorzugsweise von 85°C bis 95°C aufweisen; das bei der höheren Temperatur zerfallende Peroxid B sollte eine Halbwertszeit von 1 Stunde bei 110°C bis 140°C, vorzugsweise bei 120 bis 135°C aufweisen. Das Peroxid A darf erfindungsgemäß beim Zerfall keine Benzoyl- und Benzylradikale bilden. Diese sind offenbar direkt oder indirekt verantwortlich für die beim Einsatz von Dibenzoylperoxid auftretenden Probleme. Bevorzugt sind solche Peroxide A, die beim Zerfall Alkoxyradikale bilden. Beispielsweise genannt seien tert.-Butylperoxy-2-ethylhexanoat, Amylperoxy-2-ethylhexanoat, tert. Butylperoxydiethylacetat sowie tert. Butylperoxyisobutanoat. Peroxid A wird bevorzugt in Mengen von 0,01 bis 0,5 Gew.-%, insbesondere von 0,03 bis 0,2 Gew.-%, bezogen auf die Monomeren, eingesetzt.

Als Peroxid B können grundsätzlich alle üblichen, bei den genannten hohen Temperaturen zerfallenden Peroxide eingesetzt werden. Bevorzugt sind jedoch solche, die frei von Benzoylgruppen sind, wenn das erhaltene EPS benzolfrei sein soll. Bevorzugte Peroxide B sind daher Dicumylperoxid, sowie die aliphatischen oder cycloaliphatischen Perketale oder Monoperoxycarbonate, die in der EP-A 574 665 aufgeführt sind. Peroxid B wird bevorzugt in Mengen von 0,1 bis 2,0 Gew.-%, insbesondere von 0,3 bis 1,0 Gew.-%, bezogen auf die Monomeren, eingesetzt.

Grundsätzlich können neben den Peroxiden A und B noch weitere Peroxide zugesetzt werden, die aber je nach ihrer Zerfallstemperatur den oben genannten Bedingungen genügen sollten.

Die Suspensionspolymerisation wird zweckmäßigerweise - wie in der EP-A 405 324 beschrieben - in zwei Temperaturstufen durchgeführt. Dabei wird zunächst die Suspension innerhalb von maximal 2 Stunden auf 80°C bis 90°C erhitzt, wobei das Peroxid A zerfällt und die Polymerisation einleitet. Danach läßt man die Reaktionstemperatur, vorzugsweise um 8 bis 17°C pro Stunde, ansteigen bis auf 100 bis 130°C und hält bei dieser Temperatur so lange bis der Restmonomerengehalt auf weniger als 0,1 % abgesunken ist. Bei dieser Temperatur zerfällt das Peroxid B. Mit dieser Verfahrensweise ist man in der Lage, EPS mit geringen Restmonomergehalten zu erzeugen. Die Verwendung von Peroxiden mit unterschiedlichen Halbwertszeiten in Abhängigkeit von der Temperatur gestattet eine kontrollierte Abfuhr der Reaktionswärme über den gesamten Prozeß. Dies ist insbesondere wichtig für große Reaktionsgefäße, wie sie in der industriellen Produktion zur Anwendung kommen, welche über ein ungünstiges Volumen/Oberflächen-Verhältnis zur Wärmeabfuhr verfügen.

Es hat sich gezeigt, daß es für die Stabilität der Suspension günstig ist, wenn bei Beginn der Suspensionspolymerisation eine Lösung von Polystyrol (bzw. einem entsprechenden Styrolcopolymerisat) in Styrol (bzw. der Mischung von Styrol mit Comonomeren) vorliegt. Bevorzugt geht man dabei von einer 0,5 bis 30, insbesondere 3 bis 20 Gew.-%igen Lösung von Polystyrol in Styrol aus. Man kann dabei frisches Polystyrol in Monomeren auflösen, zweckmäßigerweise setzt man aber sogenannte Randfraktionen ein, die bei der Auftrennung des bei der Herstellung von expandierbarem Polystyrol anfallenden Perlspektrums als zu große oder zu kleine Perlen ausgesiebt werden. In der Praxis haben derartige nicht verwertbare Randfraktionen Durchmesser von größer als 2,0 mm bzw. kleiner als 0,2 mm. Auch Polystyrol-Recyclat und Schaumpolystyrol-Recyclat können eingesetzt werden. Eine andere Möglichkeit besteht darin, daß man Styrol in Substanz bis zu einem Umsatz von 0,5 bis 70 % vorpolymerisiert und das Vorpolymerisat zusammen mit den Graphitpartikeln in der wässrigen Phase suspendiert und auspolymerisiert.

Bei der Suspensionspolymerisation entstehen perlförmige, im wesentlichen runde Teilchen mit einem mittleren Durchmesser im Bereich von 0,2 bis 2 mm, in denen die Graphitpartikel homogen verteilt sind. Sie können mit den üblichen Beschichtungsmitteln, z. B. Metallstearaten, Glycerinestern und feinteiligen Silicaten beschichtet werden.

Die expandierbaren, Graphitpartikel enthaltenden Styrolpolymerisate können zu Polystyrolschaumstoffen mit Dichten von 5 bis 35 g/l, bevorzugt von 8 bis 25 g/l und insbesondere von 10 bis 15 g/l, verarbeitet werden.

Hierzu werden die expandierbaren Partikel vorgeschäumt. Dies geschieht zumeist durch Erwärmen der Partikel mit Wasserdampf in sogenannten Vorschäumern.

Die so vorgeschäumten Partikel werden danach zu Formkörpern verschweißt. Hierzu werden die vorgeschäumten Partikel in nicht gasdicht schließende Formen gebracht und mit Wasserdampf beaufschlagt. Nach Abkühlen können die Formteile entnommen werden.

### Beispiel 1 (Vergleich)

In 419 kg Styrol werden 21 kg Polystyrol (PS 158 K der BASF) gelöst und 8,5 kg pulverförmiges Graphit (Graphitwerk Kropfmühl AG, AF) homogen suspendiert unter Beimischung von 0,21 kg Dibenzoylperoxid, 2,1 kg Dicumylperoxid, sowie 2,9 kg Hexabromcyclododecan. Die organische Phase wird in 485 1 vollentsalztes Wasser in einem druckfesten 1 m³ Rührkessel eingebracht. Die wäßrige Phase enthält 1,16 kg Natriumpyrophosphat und 2,15 kg Bittersalz. Das Reaktionsgemisch wird unter Rühren schnell auf 90°C erhitzt. Anschließend wird innerhalb von 4 h auf 125°C erhitzt, wobei nach 2 h 5,8 kg Emulgator K 30/40 (Bayer AG) und nach circa 2,5 h 30 kg Pentan zugegeben werden. Schließlich wird bei einer Temperatur von 125°C auspolymerisiert.

### Beispiel 2 (Vergleich)

Analog Beispiel 1, jedoch statt 0,21 kg Dibenzoylperoxid 0,42 kg Dibenzoylperoxid.

### Beispiel 3 (Vergleich)

Analog Beispiel 1, jedoch kein Dibenzoylperoxid

### Beispiel 4

Analog Beispiel 1, jedoch statt Dibenzoylperoxid 0,34 kg tert.- Butylperoxy-2-ethylhexanoat (Halbwertszeit 1 Stunde bei 91°C).

### Beispiel 5

Analog Beispiel 1, jedoch statt Dibenzoylperoxid 0,25 kg tert. Butylperoxy-2-ethylhexanoat.

### Ergebnisse:

In den Beispielen 1 bis 3 beobachtet man, daß selbst nach Erreichen von 90°C dem Reaktionsgefäß weiterhin von außen Wärme zugeführt werden muß. Erst nach dem Erreichen einer Reaktionstemperatur von über 100°C muß dem Reaktionsgefäß Wärme abgeführt werden, um das vorgegebene Temperaturprofil einzuhalten. Dabei wird aber kurzzeitig sehr viel Wärme frei, so daß sehr stark abgekühlt werden muß. Bei einem großtechnischen Ansatz, z.B. in einem 50 m³-Kessel wäre das nicht mehr beherrschbar.

Wesentlich anders ist die Beobachtung in den Beispielen 4 und 5, wo tert.-Butylperoxy-2-ethylhexanoat anstelle von Dibenzoylperoxid eingesetzt wird. Bereits nach dem Erreichen von 90°C muß dem Reaktionsgefäß Wärme abgeführt werden, so daß in der 2. Stufe wesentlich weniger Wärme frei wird, die auch bei größeren Ansätzen problemlos abgeführt werden kann.

## Patentansprüche

1. Verfahren zur Herstellung von expandierbaren Styrolpolymerisaten (EPS), bei dem man Styrol, gegebenenfalls zusammen mit bis zu 20 % seines Gewichts an Comonomeren, in wäßriger Suspension in Gegenwart von 0,1 bis 25 Gew.-% Graphitpartikel und von mindestens zwei, bei verschiedenen Temperaturen zerfallenden organischen Peroxiden A und B polymerisiert, wobei das Peroxid A eine Halbwertszeit von 1 Stunde bei 80°C bis 100°C, und das Peroxid B eine Halbwertszeit von 1 Stunde bei 110°C bis 140°C, aufweist, dadurch gekennzeichnet, daß das bei niedrigerer Temperatur zerfallende Peroxid A beim Zerfall weder Benzoyl- noch Benzylradikale bildet.

2. Verfahren zur Herstellung von EPS nach Anspruch 1, dadurch gekennzeichnet, daß das Peroxid A in Mengen von 0,01 bis 0,5 Gew.-% und das Peroxid B in Mengen von 0,1 bis 2,0 Gew.-%, jeweils bezogen auf die Monomeren, eingesetzt wird.

3. Verfahren zur Herstellung von EPS nach Anspruch 1, dadurch gekennzeichnet, daß das Peroxid A beim Zerfall Alkoxyradikale bildet.

4. Verfahren zur Herstellung von EPS nach Anspruch 1, dadurch gekennzeichnet, daß das Peroxid A tert.-Butylperoxy-2-ethylhexanoat ist.

5. Verfahren zur Herstellung von EPS nach Anspruch 1, dadurch gekennzeichnet, daß das Peroxid B frei von Benzoylgruppen ist.

6. Verfahren zur Herstellung von EPS nach Anspruch 1, dadurch gekennzeichnet, daß das Peroxid B Dicumylperoxid ist.

7. Verfahren zur Herstellung von EPS nach Anspruch 1, dadurch gekennzeichnet, daß bei der Suspensionspolymerisation eine Lösung von Polystyrol in Styrol eingesetzt wird.

## Revendications

1. Procédé pour la production de polymères de styrène expansibles (EPS), dans lequel on polymérise du styrène, le cas échéant de manière conjointe avec, jusqu'à concurrence de 20 % de son poids, des comonomères, en suspension aqueuse en présence de particules de graphite à concurrence de 0,1 à 25 % en poids et d'au moins deux peroxydes organiques A et B se décomposant à différentes températures, dans lequel le peroxyde A présente un temps de demi-vie de 1 heure à une température de 80 °C à 100 °C et le peroxyde B présente un temps de demi-vie de 1 heure à une température de 110 °C à 140 °C, caractérisé en ce que le peroxyde A se décomposant à la température inférieure ne forme, lors de sa décomposition, ni des radicaux benzoyle, ni des radicaux benzyle.

2. Procédé pour la production de EPS selon la revendication 1, caractérisé en ce qu'on met en oeuvre le peroxyde A dans des quantités de 0,01 à 0,5 % en poids et le peroxyde B dans des quantités de 0,1 à 2,0 % en poids, chaque fois rapportées aux monomères.

3. Procédé pour la production de EPS selon la revendication 1, caractérisé en ce que le peroxyde A forme des radicaux alcoxy lors de sa décomposition.

4. Procédé pour la production de EPS selon la revendication 1, caractérisé en ce que le peroxyde A est du tert.-butylperoxy-2-éthylhexanoate.

5. Procédé pour la production de EPS selon la revendication 1, caractérisé en ce que le peroxyde B est exempt de groupes benzoyle.

6. Procédé pour la production de EPS selon la revendication 1, caractérisé en ce que le peroxyde B est le peroxyde de dicumyle.

7. Procédé pour la production de EPS selon la revendication 1, caractérisé en ce qu'on met en oeuvre, lors de la polymérisation en suspension, une solution de polystyrène dans du styrène.

## Claims

1. A process for the preparation of expandable styrene polymers (EPS), in which styrene, if required together with up to 20% of its weight of comonomers, is polymerized in aqueous suspension in the presence of from 0.1 to 25% by weight of graphite particles and of at least two organic peroxides A and B which decompose at different temperatures, the peroxide A having a half-life of 1 hour at from 80 to 100°C and the peroxide B having a half-life of 1 hour at from 110 to 140°C, wherein the peroxide A decomposing at the lower temperature forms neither benzoyl nor benzyl radicals on decomposition.

2. A process for the preparation of EPS as claimed in claim 1, wherein the peroxide A is used in amounts of from 0.01 to 0.5% by weight and the peroxide B is used in amounts of from 0.1 to 2.0% by weight, based in each case on the monomers.

3. A process for the preparation of EPS as claimed in claim 1, wherein the peroxide A forms alkoxy radicals on decomposition.

4. A process for the preparation of EPS as claimed in claim 1, wherein the peroxide A is tert-butyl peroxy-2-ethylhexanoate.

5. A process for the preparation of EPS as claimed in claim 1, wherein the peroxide B is free of benzoyl groups.

6. A process for the preparation of EPS as claimed in claim 1, wherein the peroxide B is dicumyl peroxide.

7. A process for the preparation of EPS as claimed in claim 1, wherein a solution of polystyrene in styrene is used in the suspension polymerization.
